# EUROPÄISCHE PATENTSCHRIFT

(11) **EP 1 710 602 B1**
(45) Veröffentlichungstag und Bekanntmachung des Hinweises auf die Patenterteilung: **14.11.2012**
(21) Anmeldenummer: 06405125.3
(22) Anmeldetag: 23.03.2006
(51) Int. Cl.: G01S 17/66, G01S 5/16, G01S 17/42

(54) **Messsystem zur Bestimmung von sechs Freiheitsgraden eines Gegenstandes**
Measurement system for determining six degrees of freedom of an object
Système de mesure pour la détermination de six degrés de liberté d'un objet

(30) Priorität: 29.03.2005 CH 5282005
(43) Veröffentlichungstag der Anmeldung: 11.10.2006
(73) Patentinhaber: Leica Geosystems AG, 9435 Heerbrugg (CH)
(72) Erfinder: Zumbrunn, Roland, 4443 Wittinsburg (CH); Markendorf, Albert, 5034 Suhr (CH); Loser, Raimund, 4334 Sisseln (CH); Dold, Jürgen, 6204 Sempach (CH); Kyle, Stephen, Castel, Guernsey GY5 7UL (GB)
(74) Vertreter: Frei Patent Attorneys

(56) Entgegenhaltungen:
- EP-B- 1 200 853
- DE-A1- 3 714 776
- GB-A- 2 341 025
- US-A1- 2004 032 596
- US-B1- 6 362 875

## Beschreibung

Die Erfindung liegt auf dem Gebiete der Messtechnik und betrifft ein Messsystem nach dem Oberbegriff des ersten unabhängigen Patentanspruchs. Das Messsystem dient zur Bestimmung von sechs Freiheitsgraden eines Gegenstandes, insbesondere eines bewegten Gegenstandes, nämlich drei Positionskoordinaten eines Bezugspunktes auf dem Gegenstand und drei Rotationswinkel (Kipp-, Gier- und Rollwinkel) um drei orthogonale Achsen, die durch den Gegenstand laufen und sich beispielsweise im Bezugspunkt kreuzen.

Zur Bestimmung der sechs Freiheitsgrade eines Gegenstandes sind beispielsweise Methoden bekannt, in denen mit Distanzmessern ausgerüstete Lasertracker, Theodoliten oder theodolitenähnliche Messgeräte zur Anwendung kommen. Mit diesen werden Richtung und Distanz (Polarkoordinaten) zu einer Mehrzahl von mit Reflektoren markierten Punkten in bekannten Positionen auf dem Gegenstand gemessen. Aus den gemessenen Koordinaten der Punkte wird dann auf die sechs Freiheitsgrade des Gegenstandes relativ zu einem vorgegebenen Koordinatensystem, beispielsweise relativ zu einem Messgerät-eigenen Koordinatensystem geschlossen. Da die markierten Punkte nacheinander anvisiert und vermessen werden, eignet sich die Methode insbesondere für unbewegte oder langsam bewegte Gegenstände.

Auch photogrammetrische Methoden sind bekannt, in denen mit einer Mehrzahl von Kameras aus verschiedenen Positionen eine Anordnung von auf dem Gegenstand in bekannten Positionen angeordneten Lichtpunkten (z.B. weisse oder reflektierende Marken, durch Lichtstrahlen beleuchtete Punkte oder Reflektoren oder aktive Lichtquellen) abgebildet werden. Aus den Positionen der Lichtpunkte auf den verschiedenen Kamerabildem werden die Richtungen zu den Lichtpunkten relativ zur optischen Achse der jeweiligen Kamera und aus der Gesamtmenge der Daten die Position und Orientierung der Lichtpunktanordnung und gegebenenfalls auch die Position und Orientierung der Kamera(s) in einem vorgegebenen Koordinatensystem bestimmt. Da solche photogrammetrische Bestimmungen der sechs Freiheitsgrade sich nur für bewegte Gegenstände eignen, wenn eine Mehrzahl von simultan arbeitenden, vorteilhafterweise stationär angeordneten und kalibrierten Kameras vorgesehen werden, ist die Methode relativ aufwändig, auch bezüglich zu bewältigender Datenmengen.

Aus diesem Grunde wird beispielsweise in der Patentschrift EP-0607303 (Metronor) vorgeschlagen, nur eine Kamera zu verwenden. Wenn auf dem Gegenstand mindestens drei Lichtpunkte angeordnet sind und eine kalibrierte Kamera verwendet wird, reichen die aus einem einzigen Kamerabild erhaltenen Daten, um die sechs Freiheitsgrade der Lichtpunktanordnung relativ zur Kamera zu bestimmen, wobei allerdings bezüglich Tiefe, das heisst bezüglich Distanz zwischen Kamera und Lichtpunktanordnung keine hohe Genauigkeit erzielt werden kann. Der Gegenstand, auf dem die Lichtpunkte angeordnet sind, ist beispielsweise ein Tastwerkzeug, wobei aus Position und Orientierung des Tastwerkzeuges auf die Position und Orientierung eines zu vermessenden Punktes, der mit dem Tastwerkzeug ertastet wird, geschlossen wird.

Zur Verbesserung der Genauigkeit der Tiefenmessung wird in einer nachfolgenden Publikation EP-0880674 (Metronor) vorgeschlagen, die einzige Kamera mit einem Distanzmessgerät zu kombinieren, wobei als Distanzmessgerät ein sogenannter Laserrangefinder genannt wird, also ein mit einem Laserstrahl als Messstrahl arbeitendes Gerät, und wobei auf dem Gegenstand zusätzlich zu den mit der Kamera zu detektierenden Lichtpunkten ein Reflektor zur Reflexion des Messstrahles zurück in das Distanzmessgerät vorgesehen ist. Der Reflektor, der gleichzeitig auch einer der durch die Kamera zu detektierenden Lichtpunkte sein kann, hat dabei in der Lichtpunktanordnung ebenfalls eine bekannte Position.

Aus der Patentschrift EP-1200853 (Leica Geosystems) ist ein Messsystem bekannt, mit dem fünf Freiheitsgrade relativ zu einem vorgegebenen Koordinatensystem eines insbesondere bewegten Reflektors bzw. eines bewegten Gegenstandes, auf dem der Reflektor angeordnet ist, bestimmbar sind. Das Messsystem weist einen Lasertracker auf, der mit einem Distanzmessgerät ausgerüstet ist. Der Lasertracker richtet einen Laserstrahl (Messstrahl) auf den Reflektor und verfolgt diesen, wenn er sich bewegt, wobei die Richtung des Messstrahles relativ zum Tracker detektiert wird. Der Reflektor ist ein Retroreflektor (Tripelspiegel-Reflektor oder Würfeleckenprisma), dessen apikale Spitze durch eine apikale Öffnung (Tripelspiegel-Reflektor) oder eine apikale Fläche (Würfeleckenprisma), die parallel zur Eintrittsfläche ausgerichtet ist, ersetzt ist, wobei die apikale Öffnung oder Fläche kleiner ist als der Querschnitt des Messstrahles. Während ein Teil des Messstrahles in das Distanzmessgerät zurück reflektiert und bezüglich Distanz zwischen Tracker und Reflektor analysiert wird, passiert ein anderer Teil des Messstrahles den Reflektor, tritt durch die apikale Öffnung oder Fläche aus diesem aus und trifft auf eine hinter dem Reflektor angeordnete, lichtempfindliche Fläche, beispielsweise eine CCD (charge coupled device, wie in einer Digitalkamera üblich) oder PSD (position sensitive device), die vorzugsweise senkrecht zur Reflektorachse und mit ihrem Mittelpunkt auf der Reflektorachse liegend angeordnet ist. Die aus der lichtempfindlichen Fläche auslesbaren Bildkoordinaten (x, y) der Stelle, an der der Messstrahlteil auf diese Fläche trifft, ist ein direktes Mass für den Einfallswinkel des Messstrahles in den Reflektor (räumlicher Winkel zwischen Messstrahl und Reflektorachse) bzw. für Drehwinkel der Reflektorachse um zwei senkrecht zum Messstrahl ausgerichtete Achsen (Kipp- und Gierwinkel oder zwei Freiheitsgrade der Orientierung des Reflektors bzw. Gegenstands). Aus den Messdaten von Tracker (zwei Raumwinkel des Messstrahles relativ zu einer vorgegebenen Null-Richtung des Trackers und Distanz von Tracker zu Reflektor) und aus den Messdaten der lichtempfindlichen Fläche hinter dem Reflektor (Kipp- und Gierwinkel der Reflektorachse relativ zum Messstrahl) können fünf Freiheitsgrade des Reflektors bzw. des Gegenstandes relativ zu einem Tracker-eigenen Koordinatensystem berechnet werden.

Es ist nun die Aufgabe der Erfindung, ein Messsystem zu schaffen, mit dem sechs Freiheitsgrade eines Gegenstandes bestimmbar sind. Das Messsystem soll betreffend Genauigkeit den oben kurz beschriebenen Messsystemen nicht unterlegen sein und soll mit an sich bekannten Messgeräten realisierbar sein.

Diese Aufgabe wird gelöst durch das Messsystem, wie es in den Patentansprüchen definiert ist.

Das erfindungsgemässe Messsystem basiert auf dem oben beschriebenen Messsystem, mit dem fünf Freiheitsgrade (drei Positionskoordinaten, sowie Kipp- und Gierwinkel) eines Reflektors oder eines Gegenstandes, auf dem der Reflektor angeordnet ist, bestimmbar sind. Das erfindungsgemässe Messsystem ist gegenüber dem bekannten System erweitert durch ein optisch detektierbares Zusatzelement, durch dessen optische Detektion eine Drehungen des Reflektors oder des Gegenstandes um die Reflektorachse bzw. um den Messstrahl (Rollwinkel) bestimmbar ist.

Das erfindungsgemässe Messsystem weist also ein auf einem Laserstrahl (Messstrahl) basierendes Winkel- und Distanzmessgerät und einen Reflektor auf, wobei der Reflektor der Gegenstand ist, dessen sechs Freiheitsgrade zu bestimmen sind, oder auf diesem Gegenstand angeordnet ist. Der Reflektor weist die oben beschriebene apikale Öffnung oder Fläche auf und die hinter dem Reflektorapex angeordnete, lichtempfindliche Fläche. Das Messsystem weist ferner einen Rechner auf, der dazu ausgerüstet ist, aus den Messdaten die sechs Freiheitsgrade des Reflektors oder Gegenstandes zu berechnen.

Das optisch detektierbare Zusatzelement ist mindestes während der Messung relativ zum Reflektor stationär und wird vom Winkel- und Distanzmessgerät aus detektiert oder es ist relativ zum Winkel- und Distanzmessgerät stationär und wird vom Gegenstand aus detektiert. Das optisch detektierbare Zusatzelement ist derart ausgestaltet und angeordnet, dass es in einer Ebene, die nicht parallel zur Reflektorachse oder zum Messstrahl ausgerichtet ist, eine Richtung oder eine Gerade definiert, die eruierbar ist aus Messdaten, die durch die optische Detektion des Zusatzelements gewonnen werden. Ein Winkel zwischen der genannten Richtung oder Geraden und einer entsprechenden, vorgegebenen Referenzrichtung- oder geraden stellt ein Mass für einen absoluten Rollwinkel (sechster Freiheitsgrad) dar, ein Winkel zwischen zwei nacheinander detektierten, solchen Richtungen oder Geraden ein Mass für eine Rollwinkelveränderung.

Das optisch detektierbare Zusatzelement ist in Bezug auf Drehachsen, die möglichst alle möglichen Messstrahlrichtungen beinhalten, nicht rotationssymmetrisch oder hat eine Rotationssymmetrie mit einem Symmetriewinkel von 180°, das heisst, die durch das Zusatzelement definierte Richtung oder Gerade ist nicht parallel zu solchen Drehachsen und sein auf einer Bildebene detektiertes Abbild kommt mit sich zur Deckung bei einer Drehung um 360° oder gegebenenfalls um 180°.

Der Gegenstand, dessen sechs Freiheitsgrade gemäss Erfindung ermittelt werden, ist der Reflektor selbst oder ein Gegenstand, auf dem der Reflektor mindestens während der Messung stationär angeordnet ist. Der Gegenstand ist beispielsweise ein handgeführtes Tastwerkzeug oder ein bewegbarer, beispielsweise ebenfalls handgeführter Scanner (z.B. Laserscanner), wobei über die in der oben genannten Weise bestimmten sechs Freiheitsgrade des Tastwerkzeuges auf die Position eines Tastpunktes oder Scanpunktes geschlossen wird. Der Gegenstand kann auch ein auf einer vorgegebenen Bahn zu steuernder Gegenstand sein, wie beispielsweise ein Roboterarm oder ein Fahrzeug, wobei für die Steuerung die ermittelten sechs Freiheitsgrade mit entsprechenden Sollwerten verglichen werden und anhand der Abweichungen entsprechende Antriebe aktiviert werden.

Die Messdaten, die im erfindungsgemässen Messsystem für die Berechnung der sechs Freiheitsgrade des Reflektors oder Gegenstandes in einem vorgegebenen Koordinatensystem (z.B. ein durch das Winkel- und Distanzmessgerät vorgegebenes Koordinatensystem) verwendet werden, sind also die folgenden:
- Position und Orientierung des Winkel- und Distanzmessgerätes im vorgegebenen Koordinatensystem;
- Position und Orientierung des Reflektors und der dahinter angeordneten, lichtempfindlichen Fläche in einem Gegenstands-eigenen Koordinatensystem;
- Position und Orientierung des Zusatzelementes im Gegenstands-eigenen oder in einem Messgerät-eigenen Koordinatensystem;
- gegebenenfalls Position und Orientierung eines zusätzlichen Detektionsmittels für die Detektion des Zusatzelementes im Gegenstands-eigenen oder Messgerät-eigenen Koodinatensystem;
- vom Winkel- und Distanzmessgerät gemessene räumliche Richtung des Messstrahles im Messgerät-eigenen Koordinatensystem und Distanz zwischen dem Messgerät und dem Reflektor;
- durch die lichtempfindliche Fläche hinter dem Reflektorapex gemessener, räumlicher Winkel zwischen Messstrahl und Reflektorachse (Kipp- und Gierwinkel);
- und mit Hilfe der lichtempfindlichen Fläche hinter dem Reflektorapex oder des zusätzlichen Detektionsmittels ermittelte, durch das Zusatzelement definierte Richtung oder Gerade.

Für die Berechnung der sechs Freiheitsgrade aus den genannten Daten verwendbare mathematische Algorithmen sind dem Fachmann bekannt.

Beispielhafte Ausführungsformen des erfindungsgemässen Messsystems werden im Zusammenhang mit den folgenden Figuren im Detail beschieben. Dabei zeigen:
- **Figur 1**: ein Schema zur Illustration der sechs Freiheitsgrade des Reflektors bzw. des Gegenstandes, auf dem der Reflektor angeordnet ist, im erfindungsgemässen Messsystem;
- **Figur 2**: ein Schema des bekannten Messsystems zur Bestimmung der fünf Freiheitsgrade (ohne Rollwinkel) des Reflektors bzw. Gegenstandes, auf dem der Reflektor angeordnet ist;
- **Figur 3**: eine beispielhafte Ausführungsform des erfindungsgemässen Messsystems, in dem das Zusatzelement auf dem Gegenstand angeordnet ist und von einem auf dem Winkel- und Distanzmessgerät angeordneten, zusätzlichen Detektionsmittel detektiert wird;
- **Figuren 4 und 5**: weitere beispielhafte Ausführungsformen des Zusatzelements für das Messsystem gemäss Fig. 3;
- **Figur 6**: eine beispielhafte Ausführungsform des erfindungsgemässen Messsystems, in der das Zusatzelement auf dem Winkel- und Distanzmessgerät angeordnet ist und von der lichtempfindlichen Fläche hinter dem Reflektor detektiert wird;
- **Figuren 7 und 8**: zwei beispielhafte Abbildungen des Zusatzelementes aus dem Messsystem gemäss Fig. 6;
- **Figur 9**: eine beispielhafte Ausführungsform des erfindungsgemässen Messsystems, in dem das Zusatzelement auf dem Winkel- und Distanzmessgerät angeordnet ist und von einem zusätzlichen Detektionsmittel auf dem Gegenstand detektiert wird;
- **Figur 10**: das zusätzliche Detektionsmittel des Messsystems gemäss Fig. 9.

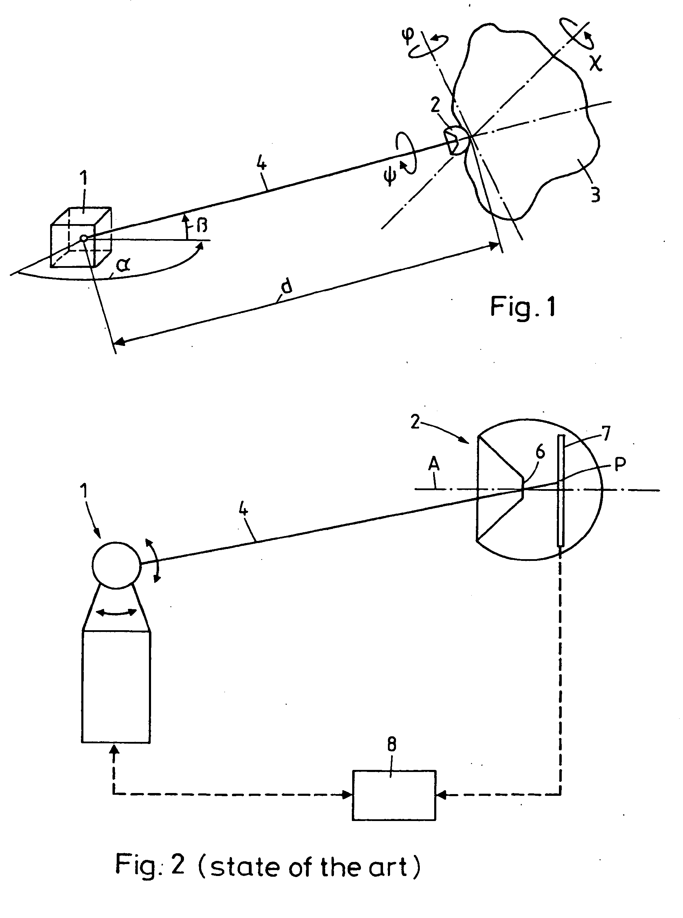

**Figur 1** zeigt die sechs zu bestimmenden Freiheitsgrade im erfindungsgemässen Messsystem. Gezeigt sind sehr schematisch das Winkel- und Distanzmessgerät 1, der Reflektor 2, der auf einem Gegenstand 3 angeordnet ist, und der vom Winkel- und Distanzmessgerät 1 auf den Reflektor 2 gerichtete Messstrahl 4. Das Winkel- und Distanzmessgerät 1 misst relativ zu einem durch das Gerät definierten Koordinatensystem (nicht dargestellt) die Polarkoodinaten α, β und d des Reflektors. Die nicht dargestellte, lichtempfindliche Fläche hinter dem Reflektorapex misst den Kippwinkel ϕ und den Gierwinkel χ des Reflektors relativ zum Messstrahl. Der sechste Freiheitsgrad ist der Rollwinkel ψ relativ zur Reflektorachse oder zum Messstrahl 4. Alle bestimmten Freiheitsgrade sind mit bekannten Algorithmen in weitere Koordinatensysteme umrechenbar, wenn Position und Orientierung des dem Winkel- und Distanzmessgerät 1 eigenen Koordinatensystems in dem weiteren Koordinatensystem bekannt oder bestimmbar sind.

**Figur 2** zeigt das dem erfindungsgemässen Messsystem zugrunde liegende, bekannte Messsystem zur Bestimmung der fünf Freiheitsgrade α, β, d, ϕ und χ des Reflektors 2 oder eines Gegenstandes, auf dem der Reflektor angeordnet ist. Zu diesem Messsystem gehören das mit einem Laserstrahl (Messstrahl 4) operierende Winkel- und Distanzmessgerät 1, das beispielsweise ein mit einem Distanzmesser ausgerüsteter Lasertracker oder Theodolit ist, und der Reflektor 2, der ausgerüstet ist, um den einfallenden Messstrahl 4 zu reflektieren, derart, dass einfallender und reflektierter Strahl parallel zueinander sind, unabhängig von der Richtung, in der der Messstrahl 4 auf den Reflektor 2 fällt. Das Winkel- und Distanzmessgerät 1 ist ausgerüstet, um die räumliche Richtung des Messstrahles zu bestimmen und den reflektierten Messstrahl zu analysieren und daraus auf eine Weglänge des Messstrahles oder auf einer Weglängeveränderung (absolute oder relative Distanzmessung) zu schliessen. Der Reflektor 2 ist ein Tripelspiegel oder ein Würfeleckenprisma, wobei der Apex des Reflektors nicht spitz ist, sondern eine Öffnung (Tripelspiegel) oder eine parallel zur Eintrittsfläche ausgerichtete Austrittsfläche 6 (Würfeleckenprisma) aufweist, wobei Öffnung oder Fläche 6 kleiner ist als der Querschnitt des Messstrahls 4. Durch diesen nicht spitzen Reflektorapex durchdringt ein Teil des Messstrahles 4 den Reflektor 2 unreflektiert und fällt auf die hinter dem Reflektorapex angeordnete, lichtempfindliche Fläche 7, die beispielsweise eine CCD oder PSD ist. Diese Fläche 7 erzeugt ein Messsignal, das der Position P (zwei Bildkoordinaten) des auffallendenden Messstrahlteiles entspricht und ein direktes Mass ist für den Kipp- und Gierwinkel der Reflektorachse A relativ zum Messstrahl 4 darstellt.

Aus den Messdaten vom Winkel- und Distanzmessgerät 1 und von der lichtempfindlichen Fläche 7 berechnet ein Rechner 8 die fünf Freiheitsgrade des Reflektors 2 oder des Gegenstandes 3 auf dem der Reflektor angeordnet ist.

Vorteilhafterweise ist die Reflektorachse A senkrecht zur lichtempfindlichen Fläche 7 ausgerichtet und durchstösst diese in ihrem Zentrum. Vorteilhafterweise stellt die Reflektorachse A die z-Achse des Gegenstands-eigenen Koordinatensystems dar und das optische Zentrum des Reflektors 2 den Koordinatenursprung.

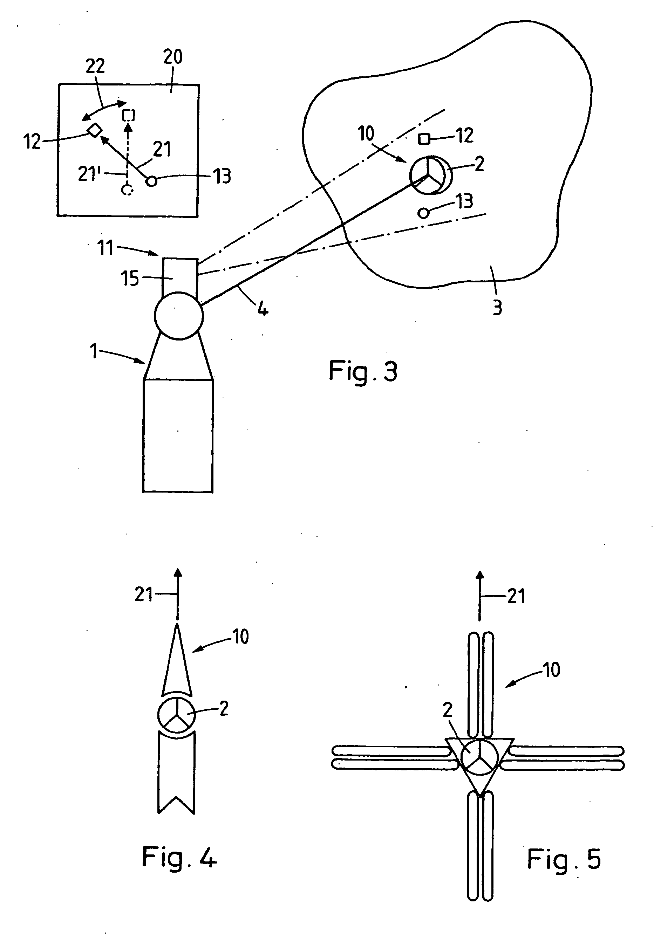

**Figur 3** zeigt eine beispielhafte Ausführungsform des erfindungsgemässen Messsystems, in dem das optisch detektierbare Zusatzelement 10 auf dem Gegenstand 3 angeordnet ist und von einem zusätzlichen Detektionsmittel 11 auf dem Winkel- und Distanzmessgerät 1 detektiert wird. Das Zusatzelement 10 besteht beispielsweise aus zwei Lichtpunkten 12 und 13. Das zusätzliche Detektionsmittel 11 ist ausgerüstet, um das Zusatzelement 10 in einer Bildebene abzubilden. Es ist beispielsweise eine Kamera 15 mit einer CCD, die mindestens während der Messung relativ zum Messstrahl stationär ist. Die beiden Lichtpunkte 12 und 13 sind passive Markierungen, Reflektoren, aktive Lichtquellen oder durch gegen den Gegenstand gerichtete Lichtstrahlen erzeugte Punkte. Sie sind vorteilhafterweise in einer Ebene angeordnet, die etwa quer zur Reflektorachse verläuft, wobei diese eine Verbindung zwischen den beiden Lichtpunkten vorteilhafterweise etwa mittig trifft. Wenn in einer durch die Kamera erstellten Abbildung 20 die beiden Lichtpunkte 12 und 13 voneinander unterscheidbar sind oder wenn die Lichtpunkte derart mit der Kamera synchronisiert werden, dass sie einzeln auf nacheinander aufgenommenen Bildern erscheinen, hat eine aus solchen Abbildungen eruierbare Verbindungsgerade eine eindeutige Richtung 21. Ein Winkel 22 zwischen der gerichteten Verbindungsgeraden 21 und einer entsprechenden, ebenfalls gerichteten Referenzgeraden 21' ist ein Mass für den Rollwinkel des Reflektors 2 oder Gegenstandes 3, wobei dieser Winkel 22 von einem Kamera-eigenen Koordinatensystem in das Koordinatensystem des Winkel- und Distanzmessgerätes oder in ein weiteres, vorgegebenes Koordinatensystem zu transformieren ist, wenn die Kameraachse nicht auf den Messstrahl 4 ausgerichtet ist.

Wenn aus den durch die Kamera 15 erstellten Abbildungen 20 des Zusatzelementes 10 eine Richtung eruierbar ist (Lichtpunkte voneinander unterscheidbar), resultiert ein einziger Winkel 22. Ist aus der Abbildung nur eine Gerade eruierbar (Lichtpunkte nicht voneinander unterscheidbar), resultieren zwei Winkel 22, die sich um eine Reflektordrehung von 180° unterscheiden. Im letzteren Falle kann trotzdem eine eindeutige Bestimmung des Rollwinkels möglich sein, wenn eine Beschränkung des Messbereiches den einen der resultierenden Winkel ausschliesst oder wenn in einer Relativmessung der eine der resultierenden Winkel nicht realistisch ist.

Offensichtlich kann auch der Reflektor 2 als einer der Lichtpunkte 12 oder 13 funktionieren, wenn die Kamera 15 koaxial mit dem Messstrahl 4 ausgerichtet ist oder wenn der Reflektor 2 beispielweise durch ein Blitzlicht (nicht dargestellt) von der Kamera 15 aus beleuchtet wird.

Offensichtlich ist es keine Bedingung für das Zusatzelement 10 des Messsystems gemäss Figur 3, dass es aus zwei Lichtpunkten 12 und 13 oder aus einem Lichtpunkt 12 oder 13 zusammen mit dem Reflektor 2 besteht. Es sind auch entsprechend geformte Anordnungen von mehr als zwei Lichtpunkten oder abbildbare, flächige Elemente als Zusatzelemente 10 denkbar. Figuren 4 und 5 zeigen zwei beispielhafte solche Zusatzelemente 10.

**Figur 4** zeigt ein Zusatzelement 10 in Form eines flächigen Pfeils aus dessen Abbild eine Richtung 22 eruierbar ist. **Figur 5** zeigt ein Zusatzelement 10, das aus einem Dreieck und einem Kreuz besteht, wobei eine Ecke des Dreiecks auf einen Kreuzschenkel ausgerichtet ist und diesen richtungsmässig auszeichnet. Die Dreiecksecken sind beispielsweise durch aktive Lichtpunkte markiert, die Kreuzschenkel auf dem Gegenstand aufgemalt oder aufgeklebt. Die Kreuzschenkel sind beispielsweise als schwarze Doppellinien auf weissem Hintergrund ausgestaltet. Dies hat den Vorteil, dass aus kurzer Distanz der Zwischenraum zwischen den schwarzen Linien und aus grösserer Distanz die schwarze Doppelline als Ganzes für die Bestimmung der Richtung 21 aus der Abbildung des Zusatzelementes analysiert werden können. Damit kann auch bei einer Detektion durch eine zoom-lose Kamera 15 bei sehr verschiedenen Distanzen zwischen Kamera 15 und Zusatzelement 10 eine gleichwertige Genauigkeit erzielt werden.

Wenn es genügt, aus der Abbildung des Zusatzelementes 10 eine Gerade zu eruieren, reicht es offensichtlich aus, auf dem Gegenstand 3 eine einzige, von der Kamera 15 detektierbare Linie anzubringen, die beispielsweise in der gleichen Weise ausgestaltet sein kann wie die Kreuzschenkel des Zusatzelementes gemäss Figur 5.

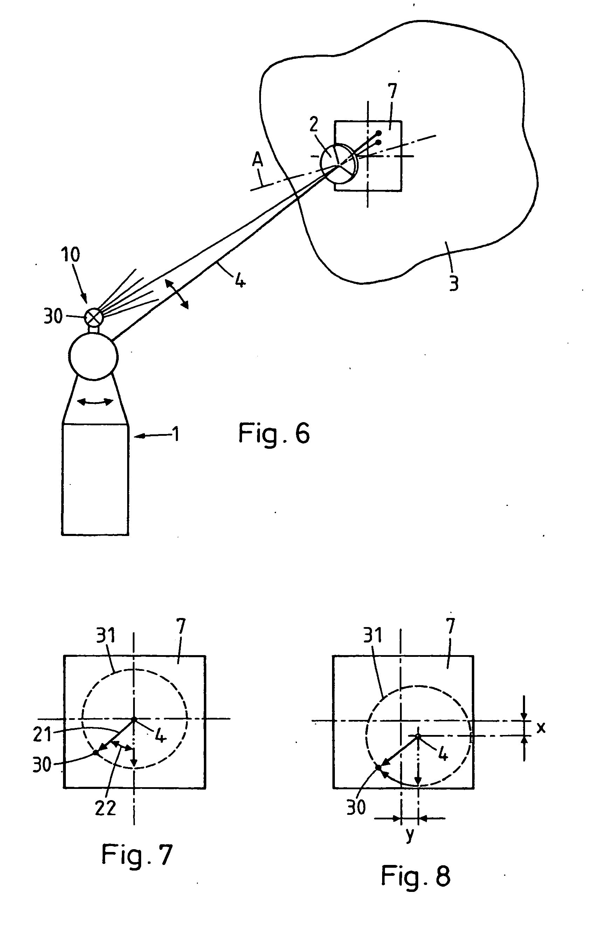

**Figur 6** zeigt eine weitere, beispielhafte Ausführungsform des erfindungsgemässen Messsytems, das wiederum ein Winkel- und Distanzmessgerät 1 und einen auf einem Gegenstand 3 angeordneten Reflektor 2 mit einer hinter dem Reflektorapex angeordneten, lichtempfindlichen Fläche 7 aufweist. Das Zusatzelement 10 ist in dieser Ausführungsform eine Lichtquelle 30, die auf dem Winkel- und Distanzmessgerät 1 angeordnet ist und die von der lichtempfindlichen Fläche 7 als Lichtpunkt detektierbar ist. Licht von der Lichtquelle 30 muss also mindestens während der Messung durch die Apexöffnung oder -fläche des Reflektors auf die lichtempfindliche Fläche 7 treffen und dort als Bildpunkt detektierbar sein, ohne die Detektion des Messstrahles 4 zu stören.

Die Lichtquelle 30 kann beispielsweise stationär auf dem Winkel- und Distanzmessgerät oder vorteilhafterweise mit dem Messstrahl um die vertikale Achse des Messgerätes drehbar angeordnet sein und diffuses Licht in etwa der Richtung des Reflektors ausstrahlen, wie dies in der Figur 6 angedeutet ist. Die Lichtquelle 30 kann auch ein anhand der vom Winkel- und Distanzmessgerät gelieferten Messdaten genau auf den Reflektor ausgerichteter Laser sein. Es ist auch ein Laser denkbar, der einen mit dem Messstrahl in derselben vertikalen Ebene liegenden Laserstrahl aussendet, wobei dieser Laserstrahl durch eine entsprechende Optik (z.B. Zylinderlinse) in dieser Ebene aufgeweitet oder wobei der Laser oder ein den Laserstrahl führendes Lichtleiterende in dieser Ebene eine Scanbewegung ausführt. Im letzteren Fall ist auch ein Sensor vorzusehen, der den vom Reflektor reflektierten Laserstrahl der Lichtquelle 30 detektiert, wobei das Sensorsignal zur Synchronisation der Detektion durch die lichtempfindliche Fläche 7 mit dem Auftreffen des Laserstrahles auf dieser synchronisiert.

Auf der lichtempfindlichen Fläche 7 wird also nicht nur der Messstrahl 4 sondern auch ein von der Lichtquelle 30 ausgehender Lichtstrahl detektiert, wobei die Lichtpunkte auf der Fläche 7 entweder voneinander unterscheidbar sind (verschiedene Intensitäten oder Wellenlängen) oder nacheinander detektiert werden. Für eine simultane Detektion ist die lichtempfindliche Fläche entsprechend auszurüsten, beispielsweise als CCD, für eine aufeinanderfolgende Detektion kann auch eine PSD verwendet werden.

**Figuren 7 und 8** zeigen zwei Beispiele von Abbildungen des Messstrahles 4 und der Lichtquelle 30 auf der lichtempfindlichen Fläche 7, sowie die daraus eruierbare Richtung 21 und den Winkel 22. Ferner ist ein Kreis 31 dargestellt, auf dem der die Lichtquelle 30 darstellende Bildpunkt bei variierendem Rollwinkel wandert. Figur 7 stellt einen Fall dar, in dem der Messstrahl 4 senkrecht auf den Reflektor 2 trifft und der entsprechende Bildpunkt im Zentrum der lichtempfindlichen Fläche 7 liegt, Figur 8 einen Fall, in dem der Messstrahl 4 schief auf den Reflektor trifft und der entsprechende Bildpunkt exzentrisch auf der lichtempfindlichen Fläche 7 liegt, wobei aus dieser Exzentrizität zwei Freiheitsgrade und aus der Richtung 21 vom einen Bildpunkt zum anderen der dritte Freiheitsgrad der Reflektororientierung errechnet werden können.

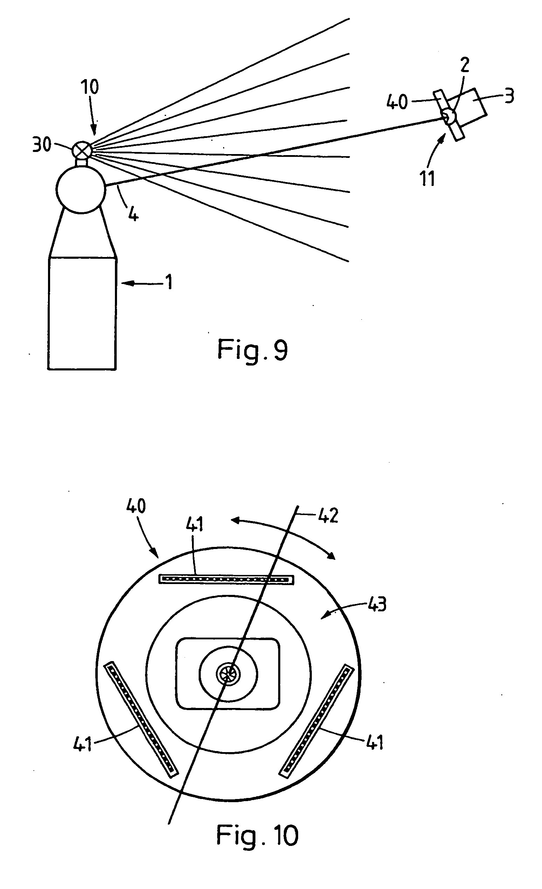

**Figuren 9 und 10** zeigen eine weitere, beispielhafte Ausführungsform des erfindungsgemässen Messsystems, in der das optisch detektierbare Zusatzelement 10 auf dem Winkel- und Distanzmessgerät 1 angeordnet ist und zu seiner Detektion auf dem Gegenstand 3 ein zusätzliches Detektionsmittel 11 vorgesehen ist.

Das Zusatzelement 10 ist wiederum eine Lichtquelle 30, die auf dem Winkel- und Distanzmessgerät 1 angeordnet ist und die Licht aussendet in der vertikalen Eben des Messstrahls 4. Die Lichtquelle 30 ist beispielsweise ein Laser und ein den Laserstrahl in der genannten Ebene aufspreizendes, optisches Element (z.B. Zylinderlinse) oder es ist ein Laser, der einen in der genannten Ebene eine Scanbewegung durchführenden Laserstrahl aussendet. Das zusätzliche Detektionsmittel 11 ist ein beispielsweise konzentrisch zum Reflektor angeordneter Ringsensor 40, der in der Figur 10 als Frontansicht dargestellt ist. Dieser Ringsensor 40 weist eine ringförmige Reihe von lichtempfindlichen Elementen 41 auf, wobei diese Elemente 41 in der Reihe derart angeordnet sind, dass die von der Lichtquelle 30 auf den Sensor geworfene, im wesentlichen vertikale Lichtlinie 42 ein oder zwei lichtempfindliche Elemente trifft und von diesen detektiert wird.

Die ringförmige Reihe von lichtempfindlichen Elementen 41 des Ringsensors 40 gemäss Figur 10 weist lichtempfindlichen Elementen 41 gegenüberliegende Lücken 43 auf, so dass die Lichtlinie 42, die von der Lichtquelle 30 auf den Ringsensor geworfen wird, nur von einem Element 41 detektiert wird. Aus dieser Detektion ist nicht eine Richtung, sondern eine Gerade eruierbar. Zur Detektion einer Richtung ist ein ununterbrochener Ring von lichtempfindlichen Elementen 41 als Sensor einzusetzen, der die Lichtlinie 42 an zwei Orten detektiert, und die Lichtquelle 30 ist für eine scannende Lichtstrahlbewegung auszurüsten. Aus dem zeitlichen nacheinander der beiden Detektionen kann dann auf eine Richtung geschlossen werden.

Offensichtlich ist es auch möglich, die Lichtquelle 30 auf dem Gegenstand 3 und den Ringsensor 40 anstelle der in der Figur 3 dargestellten Kamera 15 auf dem Winkel - und Distanzmessgerät 1 anzuordnen.

## Patentansprüche

1. Messsystem zur Bestimmung von drei Positionskoordinaten (α, β, d) und Kipp-, Gier- und Rollwinkel (ϕ, χ, ψ) eines Reflektors (2) oder eines Gegenstandes (3), auf dem der Reflektor (2) angeordnet ist, welches Messsystem ein mit einem Laserstrahl als Messstrahl (4) arbeitendes Winkel- und Distanzmessgerät (1), den Reflektor (2) und einen Rechner (8) aufweist, wobei der Reflektor (2) für eine Parallelreflexion des Messstrahles (4) ausgerüstet ist und eine apikale Öffnung oder Fläche (6) aufweist, derart, dass ein Teil des auf den Reflektor (2) gerichteten Messstrahles (4) durch die apikale Öffnung oder Fläche (6) auf eine hinter dem Reflektorapex angeordnete, lichtempfindliche Fläche (7) trifft, und wobei der Rechner (8) ausgerüstet ist, um aus den vom Winkel- und Distanzmessgerät (1) und von der lichtempfindlichen Fläche (7) erzeugten Messdaten die drei Positionskoordinaten (α, β, d) sowie den Kipp- und den Gierwinkel (ϕ, χ) des Reflektors (2) oder Gegenstandes (3) zu berechnen, **dadurch gekennzeichnet, dass** das Messsystem eine weitere Lichtquelle (30) aufweist, die auf dem Winkel- und Distanzmessgerät (1) stationär angeordnet ist von der lichtempfindlichen Fläche (7) detektierbar ist, wobei das Licht von der weiteren Lichtquelle (30) mindestens während der Messung durch die apikale Öffnung oder -Fläche (6) des Reflektors (2) auf die lichtempfindliche Fläche (7) trifft;
oder von einem um den Reflektor angeordneten Ringsensor (40) detektierbar ist, wobei durch die weitere Lichtquelle (30) eine Lichtlinie (42) auf den Gegenstand geworfen wird, die von einer ringförmigen Reihe von lichtempfindlichen Elementen (41) des Ringsensors (40) detektierbar ist; und
wobei die weitere Lichtquelle (30) eine nicht auf der Reflektorachse (A) oder auf dem Messstrahl (4) liegende Richtung (21) oder Gerade definiert, und dass der Rechner (8) ferner ausgerüstet ist für eine Berechnung des Rollwinkels (ψ) des Reflektors (2) oder Gegenstandes (3) aus durch die Detektion der weiteren Lichtquelle (30) gewonnenen Messdaten.

2. Messsystem nach Anspruch 1, **dadurch gekennzeichnet, dass** die weitere Lichtquelle (30) von der hinter dem Reflektorapex angeordneten, lichtempfindlichen Fläche (7) detektierbar ist und dass der Rechner (8) ausgerüstet ist für die Berechnung des Rollwinkels (ψ) aus von der lichtempfindlichen Fläche gemessenen Koordinaten von durch die weitere Lichtquelle (30) und den Messstrahl (4) erzeugten Bildpunkten.

3. Messsystem nach Anspruch 2, **dadurch gekennzeichnet, dass** die weitere Lichtquelle (30) in derjenigen senkrechten Ebene strahlt, in der der Messstrahl (4) liegt.

4. Messsystem nach einem der Ansprüche 1 bis 3, **dadurch gekennzeichnet, dass** das Winkel- und Distanzmessgerät (1) ein Lasertracker ist.

5. Messsystem nach einem der Ansprüche 1 bis 4, **dadurch gekennzeichnet, dass** der Gegenstand (3) ein Tastwerkzeug oder ein bewegbarer Laserscanner ist und dass der Rechner (8) ausgerüstet ist für eine Berechnung des Tastpunktes des Tastwerkzeugs oder des Scanpunktes des Laserscanners aus den berechneten Positionskoordinaten (α, β, d) und dem Kipp-, Gier- und Rollwinklel (ϕ, χ, ψ) des Tastwerkzeuges oder Laserscanners.

## Claims

1. A measurement system for determining three position coordinates (α, ß, d) and the tilt-, yaw- and roll angle (ϕ, χ, ψ) of a reflector (2) or of an object (3) on which the reflector (2) is arranged, said measurement system comprising an angle- and distance measurement apparatus (1), the reflector (2) and a computer (8), wherein the measurement apparatus (1) emits a laser beam as a measurement beam (4) and the reflector (2) is designed for a parallel reflection of the measurement beam (4) and comprises an apical opening or surface (6) in a manner such that a part of the measurement beam (4) directed onto the reflector (2) passes through the apical opening or surface (6) and is incident on a light-sensitive surface (7) arranged behind the reflector apex, and wherein the computer (8) is equipped for computing the three position coordinates (α, ß, d) and the tilt and yaw angle (ϕ, χ) of the reflector (2) or the object (3), from the measurement data produced by the angle- and distance measurement apparatus (1) and by the light-sensitive surface (7), **characterized in that** the measurement system comprises a further light source (30) which is arranged on the angle- and distance measurement apparatus (1) and is detectable by the light-sensitive surface (7) or by a ring sensor (40) arranged around the reflector, wherein the further light source (30) defines a direction (21) or a line which does not lie on the reflector axis (A) or on the measurement beam (4), and that the computer (8) is further equipped for computing the roll angle (ψ) of the reflector (2) or the object (3) from measurement data obtained by the detection of the further light source (30).

2. A measurement system according to claim 1, **characterized in that** the further light source (30) is detectable by the light-sensitive surface (7) arranged behind the reflector apex, and that the computer (8) is equipped for computing the roll angle (ψ) from coordinates of image points produced by the further light source (30 and the measurement beam (4), said coordinates being determined by the light-sensitive surface.

3. A measurement system according to claim 2, **characterized in that** the further light source (30) beams in a vertical plane in which the measurement beam (4) lies.

4. A measurement system according to one of the claims 1 to 3, **characterized in that** the angle- and distance measurement apparatus (1) is a laser tracker.

5. A measurement system according to one of the claims 1 to 4, **characterized in that** the object (3) is a touch tool or a movable laser scanner and that the computer (8) is equipped for computing the position of a touch point of the touch tool or of a scan point of the laser scanner from the computed position coordinates (α, ß, d) and the tilt-, yaw- and roll angle (ϕ, χ, ψ) of the touch tool or laser scanner.

## Revendications

1. Système de mesure destiné à déterminer trois coordonnées de position (α, β, d) et les angles d'inclinaison, de lacet et de roulis (ϕ, χ, ψ) d'un réflecteur (2) ou d'un objet (3) sur lequel le réflecteur (2) est disposé,
le système de mesure présentant un appareil (1) de mesure d'angle et de distance qui travaille avec un faisceau laser comme faisceau de mesure (4), le réflecteur (2) et un calculateur (8),
le réflecteur (2) étant équipé pour réfléchir parallèlement le faisceau de mesure (4) et présentant à une ouverture ou surface apicale (6) telles qu'une partie du faisceau de mesure (4) dirigé sur le réflecteur (2) aboutisse à travers l'ouverture ou surface apicale (6) sur une surface photosensible (7) disposée en arrière du sommet du réflecteur, le calculateur (8) étant équipé pour calculer à partir des données de mesure fournies par l'appareil (1) de mesure d'angle et de distance et par la surface photosensible (7) les trois coordonnées de position (α, β, d) ainsi que l'angle d'inclinaison et l'angle de lacet (ϕ, χ) du réflecteur (2) ou de l'objet (3),
**caractérisé en ce que**
le système de mesure présente une autre source de lumière (30) disposée sur l'appareil (1) de mesure d'angle et de distance et dont la lumière peut être détectée par la surface photosensible (7), la lumière de l'autre source de lumière (30) étant incidente' sur la surface photosensible (7) à travers l'ouverture ou surface apicale (6) du réflecteur (2) au moins pendant la mesure ou pouvant être détectée par un détecteur annulaire (40) disposé autour du réflecteur, une ligne lumineuse (42) étant projetée sur l'objet par l'autre source de lumière (30) et pouvant être détectée par une rangée annulaire d'éléments photosensibles (41) du détecteur annulaire (40),
**en ce que** l'autre source de lumière (30) définit une direction (21) ou une droite qui n'est pas située sur l'axe (A) du réflecteur ou sur le faisceau de mesure (4) et
**en ce que** le calculateur (8) est en outre équipé pour calculer l'angle de roulis (ψ) du réflecteur (2) ou de l'objet (3) à partir des données de mesure obtenues grâce à la détection de l'autre source de lumière (30).

2. Système de mesure selon la revendication 1, **caractérisé en ce que** la lumière de l'autre source de lumière (30) peut être détectée par la surface photosensible (7) disposée en arrière du sommet du réflecteur et **en ce que** le calculateur (8) est équipé pour calculer l'angle de roulis (ψ) à partir des coordonnées, mesurées par la surface photosensible, de points d'image formés par la lumière de l'autre source de lumière (30) et par le faisceau de mesure (4).

3. Système de mesure selon la revendication 2, **caractérisé en ce que** l'autre source de lumière (30) est située dans le plan vertical dans lequel est situé le faisceau de mesure (4).

4. Système de mesure selon l'une des revendications 1 à 3, **caractérisé en ce que** l'appareil (1) de mesure d'angle et de distance est un suiveur laser.

5. Système de mesure selon l'une des revendications 1 à 4, **caractérisé en ce que** l'objet (3) est un outil de palpage ou un scanner laser mobile et **en ce que** le calculateur (8) est équipé pour calculer le point de palpage de l'outil de palpage ou le point de balayage du scanner laser à partir des coordonnées de position (α, β, d) calculées et des angles d'inclinaison, de lacet et de roulis (ϕ, χ, ψ) de l'outil de palpage ou du scanner laser.
